# EUROPÄISCHE PATENTANMELDUNG

(11) **EP 3 156 955 A1**
(43) Veröffentlichungstag der Anmeldung: **19.04.2017**
(21) Anmeldenummer: 16002125.9
(22) Anmeldetag: 04.10.2016
(51) Int. Cl.: G06Q 10/08, G06Q 50/28, G06Q 50/30

(54) **FRACHTKONTROLLSYSTEM FÜR TRANSPORTMASCHINEN**

(30) Priorität: 13.10.2015 DE 102015117407
(71) Anmelder: Wietmarscher Ambulanz- und Sonderfahrzeug GmbH, 49835 Wietmarschen (DE)
(72) Erfinder: Gotthardt, Daniel, 22397 Hamburg (DE)
(74) Vertreter: Willems, Volker

(57) **Zusammenfassung**

Die Erfindung betrifft eine Transportmaschine (10) zum Transportieren einer Ladung (20), wobei die mitzuführende Ladung (20) mit einer Datenbank (30) einer elektronischen Datenverarbeitungsanlage (28) abzugleichen ist.

## Beschreibung

### Technisches Gebiet

Die Erfindung betrifft eine Transportmaschine zum Transportieren einer Ladung, wobei die mitzuführende Ladung mit einer Datenbank einer elektronischen Datenverarbeltungsanlage abzugleichen ist.

### Beschreibung

Transportmaschinen sind beispielsweise Kraftfahrzeuge, Züge, Flugzeuge, Helikopter und Schiffe, welche eine Ladung zu transportieren haben. Grundsätzlich sollen unter diesem Begriff alle Maschinen oder Geräte fallen die Ladung transportieren. Die Ladung wird oft manuell abgelesen oder über Barcodes mittels eines Barcodelesers manuell ausgelesen. Die Daten werden schließlich mit einer Datenbank abgeglichen.

Bei Ambulanzen oder Feuerwehrfahrzeugen kommt es oft auf die Haltbarkeit von mitgeführter Ladung an. Sobald z.B. die Haltbarkeit von Verbandazeug oder Medizin abgelaufen Ist, muss dieses zurzeit manuell aussortiert und ausgetauscht werden. Das Inventar unterliegt keiner in dem Fahrzeug selbst automatisierten Kontrolle.

### Stand der Technik

Aus der DE 698 38 960 T2 ist ein System und ein Verfahren für eine elektronische Bestandsführung unter Verwendung von Hochfrequenzidentifizierungs- (RFID)-Marken und eines Antikollisionsprotokolls bekannt. Das Antikollisionsprotokoll löst das Problem einer Zekschlitzkonkurrenz. Das System eignet sich ganz besonders zur Verwendung beim Gepäckumschlag in der Verkehrsflugindustrie. Insbesondere eignet es sich zur Verwendung bei der raschen Bestandsaufnahme von Gepäckstücken von Fluggästen und der anschließenden korrekten Zuordnung von Gepäckstücken zu den Fluggästen.

In der DE 10 2004 061 858 B4 wird ein Verfahren zur Verwaltung von Artikeln durch Anwendung eines Verfahrens, bei dem eine geheime Identifikationsinformation drahtlos kommuniziert wird beschrieben, was mit RFID (Radio bzw. Funk-Frequenz-Identifikation) bezeichnet wird. Bei diesem Verfahren werden beispielsweise Ort und Art von gelagerten Produkten von Computern verwaltet. Durch Anbringen eines RFID-Etiketts bzw. einer RFID-Plakette (auch als IC-Plakette, Funk-Plakette, elektronische Plakette und dergleichen bezeichnet) an dem Artikel oder seiner Verpackung, kann eine Information zur Identifizierung einer Produktklassifikation und eines individuellen Produkts in einem Vertellungsprozess des Artikels oder dergleichen aus der IC-Plakette ausgelesen werden.

Die DE 10 2005 015 843 A1 beschreibt ein Modul zur Qualltätssicherung, womit pharmazeutische Substanzen eindeutig identifiziert werden können. Dies kann optisch mittels eines Strichcodes oder funktechnisch mittels eines RFID-Chips erfolgen. Es werden dort Mittel zur Identifikation und Zuordnung zu einem speziellen Patienten offenbart, so dass die enthaltenen Substanzen nur nach eindeutiger Identifikation und Sicherstellung der Einhaltung zeitlicher Qualitätsparameter freigegeben werden.

Aus der DE 10 2006 022 526 A1 ist ein elektronisches RFID-Transponder Inventursystem u. -verfahren für permanente Rohstoffträger bekannt. Ein Radio Frequenz-Identifikations- System (RFID), das mit Transpondern behaftete Gegenstände erfasst und elektronisch in Datenbanken registriert und bewertet wird in dieser Druckschrift offenbart. Die Benutzung von permanenten Rohstoffträgem bzw. -behältern, die mit RFID -Transpondern gekennzeichnet sind, werden hinsichtlich Art, Menge und der Wert, wie die Ausbeuterate und der Konsignationsstatus der Rohstoffe erkannt. Durch eine bestimmte Anordnung der RFID-Antennen und Transponder kann eine bestimmte Einteilung der Lagerorte erfasst werden.

Die DE 10 2008 013 588 A1 offenbart eine Werkzeugtransportvorrichtung zum Bereitstellen von Werkzeugen. Ein Werkzeugbehälter nimmt Werkzeuge auf, die jeweils mit einem Kennzeichnungstag versehen sind. Eine Werkzeugkontrolleinrichtung liest die Werkzeugdaten aus den Kennzeichnungstags zur Ermittlung der in dem Werkzeugbehälter enthaltenen Werkzeuge aus, wobei die Kennzeichnungstags RFID-Kennzeichnungstags sind.

RFID-Systeme sind bereits lange bekannt und werden meist auch stationär eingesetzt, um Ladung, Fracht oder Güter zu erfassen und digital zu verarbeiten. Die genannten Systeme haben jedoch den Nachteil, dass sie die Ladung nicht aktuell in einem mobilen Fahrzeug zur Kontrolle erfassen.

### Offenbarung der Erfindung

Aufgabe der Erfindung ist es daher, die Nachteile des Standes der Technik zu vermeiden und ein Überwachungssystem zur Überwachung der Richtlgkelt und Vollständigkeit von Ladung zu schaffen.

Erfindungsgemäß wird die Aufgabe dadurch gelöst, dass bei einer Transportmaschine zum Transportieren einer Ladung der eingangs genannten Art ein RFID-System zum automatischen Erfassen von Ladung und zum digitalen Abgleichen mit der Datenbank vorgesehen ist. Über das RFID-System wird nun die Ladung erfasst und beispielsweise anhand der Datenbank ermittelt, ob die Ladung vollständig ist. Durch die Automatisierung kann so schnell festgestellt werden, ob ein Frachtteil fehlt. Sofern ein Frachtteil fehlt, kann es nachgeführt werden. Die Ladung lässt sich damit vollständig automatisch verwalten, sobald sie in die Transportmaschine gelangt.

Eine vorteilhafte Ausgestaltung der Erfindung besteht darin, dass ein RFID-Transponder an den zu erfassenden Frachtteilen der Ladung vorgesehen ist. Diese Maßnahme erlaubt es jedes einzelne Frachtteile, welches mit der Transportmaschine transportiert wird, zu erfassen und es mit der Datenbank der elektronischen Datenverarbeitungsanlage zu vergleichen. So kann jederzeit festgestellt werden, ob ein Frachtteil fehlt bzw. verbraucht ist.

Eine weitere vorteilhafte Ausgestaltung der erfindungsgemäßen Transportmaschine zum Transportieren einer Ladung ergibt sich dadurch, dass ein Empfänger für die RFID-Transponder in der Transportmaschine zur Erfassung der Frachtteile der Ladung vorgesehen ist. Damit kann die Ladung nicht nur beim Beladen erfasst werden, sondern lässt sich ununterbrochen kontrollieren. Damit hat die Transportmaschine immer aktuelle Daten bezüglich ihrer Ladung. Wird ein Teil aus dem Frachtraum entfernt, wird dieser Vorgang unmittelbar über das RFID-System erfasst und in der Datenbank gespeichert. Kommt ein neues Frachtteil hinzu, so wird auch dieses entsprechend in der Datenbank festgehalten.

In einer vorteilhaften Ausgestaltung der Erfindung ist die Transportmaschine zum Transportieren einer Ladung als Kraftfahrzeug, Schiff, Hubschrauber oder Flugzeug ausgebildet. Es hat sich gezeigt, dass sich in diesen Transportmaschinen das RFID-System als besonders geeignet herausgestellt hat. Für größere Ladungen, Insbesondere mit vielen Frachtteilen, lässt sich diese hinsichtlich der Beladung und Art besonders gut kontrollieren. Vor allem ist die Aktualität, die durch dieses RFID-System bei der Ladung besteht, von besonderem Vorteil.

Eine besondere Ausbildung der erfindungsgemäßen Transportmaschine zum Transportieren einer Ladung besteht ferner darin, dass die Transportmaschine einen

Frachtraum, Frachtcontainer oder Frachtbehälter aufweist, in dem die Frachtteile der Ladung mittels des RFID-Systems lokalisiert sind. Durch eine geeignete Anordnung der Empfängerantennen lässt sich beispielsweise durch Kreuzpeilung oder Signallaufzeitmessungen ein Frachtteil genau in dem Frachtraum bzw. Frachtcontainer oder Frachtbehälter lokalisieren.

Oft kommt es zu Problemen, wie ein Frachtraum zu beladen ist. Hier wird häufig auf die Erfahrung des Fachpersonals zurückgegriffen. Hier entstehen jedoch Schwachpunkte die bei einer falschbeladung zu Unfällen führen können. Eine zweckmäßige Ausgestaltung der erfindungsgemäßen Transportmaschine zum Transportieren einer Ladung besteht daher darin, dass zur Optimierung der Beladung hinsichtlich Anordnung, Gewicht und/oder Größe auf die Daten der Datenbank der elektronischen Datenverarbeitungsanlage zurückgegriffen wird. Ein Optimierungsalgorithmus der elektronischen Datenverarbeitungsanlage kann beispielsweise mit den entsprechenden Parametern der Datenbank einen geeigneten Anordnungsvorschlag für die zu transportierende Ladung für einen Frachtraum generieren.

Eine weitere zweckmäßige Ausgestaltung der Erfindung besteht darin, dass ein Alarmsystem vorgesehen ist, welches aktiviert wird, sobald ein Beladungsfehler beim Abgleich mit der elektronischen Datenverarbeitungsanlage erfasst wird. Zahlreiche Fehler entstehen durch menschliches Versagen. So ist auch in dem Fall der Beladung der Mensch in gewisser Weise eine Schwachstelle. Um dem beladenen Menschen Hilfsmittel an die Hand zu geben, diese Fehler zu vermeiden, wird bei Fehlbeladung das Alarmsystem aktiviert.

Bei einem Rettungsfahrzeug, wie einem Ambulanz- oder Feuerwehrfahrzeug kann es zu verheerenden Folgen kommen, wenn das Einsatzmaterial nur unvohständig ist. Wenn beispielsweise bestimmte notwendige medizinische Geräte bei einer Ambulanz fehlen, so kann hierdurch ein Patient zu Schaden kommen. In einer vorteilhaften Ausbildung der erfindungsgemäßen Transportmaschine zum Transportieren einer Ladung ist daher vorgesehen, dass das RFID-System zum automatischen Erfassen von Ladungen die Ladung auf Vollständigkeit überwacht.

Eine weitere vorteilhafte Ausgestaltung der erfindungsgemäßen Transportmaschine zum Transportieren einer Ladung besteht darin, dass neue Frachtteile nachgeführt werden, sofern der Abgleich mit der Datenbank der elektronische Datenverarbeitungsanlage eine Unvollständigkeit der Ladung erfasst. Diese Maßnahme dient dazu bei fehlenden Frachtteilen weitestgehend automatisch dafür zu sorgen, dass die fehlenden Teile logistisch nach geführt werden. Dadurch kann eine gewisse Vollständigkeit der Ladung immer gewährleistet werden, die fortwährend überprüft wird.

In einer Ambulanz werden vielfältig Produkte bzw. Materialien verwendet, die nur eine bestimmte Haltbarkeit aufweisen. Wenn Sie eine Haltbarkeitsdauer überschritten haben, kann ihre Eigenschaft sich extrem verändern. Daher wird diesen Produkten bzw. Materialien ein Haltbarkeitsdatum zugeordnet. Wenn dieses Haltbarkeifisdatum überschritten ist, so muss dieses Produkt bzw. Material, sofern sie nicht verbraucht wurden, ausgetauscht werden. Eine bevorzugte Ausbildung der erfindungsgemäßen Transportmaschine zum Transportieren einer Ladung wird dadurch erzielt, dass das RFID-System zur Überwachung von Haltbarkeiten vorgesehen ist. Dabei ist ein Ablaufdatum jeweils in dem RFID-Transponder der zu überwachenden Frachtteile vorgesehen. Die Maßnahme hilft beim Austauschen der Teile mit einer begrenzten Haltbarkeit. Der Vorgang der Überwachung kann mittels der elektronischen Datenverarbeitung und dem RFID-System vollständig automatisiert werden. Vorzugsweise wird auch ein Alarmsystem aktiviert, sobald die Haltbarkeiten von Frachtteilen überschritten ist. Dies alarmiert umgehend die Akteure, sobald ein Produkt, wie Medikamente oder Verbandsmaterial, sein Haltbarkeitsdatum überschritten hat.

Eine weitere vorteilhafte Ausgestaltung der Erfindung besteht darin, dass die Transportmaschine als ein Bereitschaftsfahrzeug bzw. Einsatzfahrzeug für Feuerwehr oder Rettungsdienste ausgebildet ist. Das RFID-System hat sich als besonders geeignet für diese Art von Fahrzeugen erwiesen. Es ist eine erhebliche Erleichterung die Utensilien, die in diesen Fahrzeugen verwendet werden zu kontrollieren und zu überwachen. Verbrauchte Materialien können problemlos erfasst und bei Bedarf einem Verursacher zugeordnet werden.

Vorzugsweise befindet sich die elektronische Datenverarbeitungsanlage in der Transportmaschine. Hierdurch wird sichergestellt, dass die Datenbank immer aktuell ist. Die Daten müssen daher nicht auf ein anderes System zum Abgleich übertragen werden.

Weitere Ausgestaltungen und Vorteile ergeben sich aus dem Gegenstand der Unteransprüche, sowie den Zeichnungen mit den dazugehörigen Beschreibungen. Ein Ausführungsbeispiel ist nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung. Die Erfindung soll sich auf alle Gegenstände beziehen, die jetzt und zukünftig der Fachmann als naheliegend zur Realisierung der Erfindung heranziehen würde.

### Kurze Beschreibung der Zeichnung

- Fig. 1: zeigt in einer schematischen Prinzipskizze ein Ambulanzfahrzeug mit einem RFID-System zum automatischen Erfassen von Ladung und zum digitalen Abgleichen mit einer Datenbank.
- Fig. 2: zeigt in einer schematischen Prinzipskizze ein Frachtfahrzeug mit einem RFID-System zum automatischen Erfassen von Ladung und zum digitalen Abgleichen mit einer Datenbank.
- Fig.3: zeigt in einer schematischen Prinzipskizze in einer Draufsicht einen Frachtraum einer Transportmaschine mit einem RFID-System zum automatischen Erfassen von Ladung und zum digitalen Abgleichen mit einer Datenbank.

### Bevorzugtes Ausführungsbeispiel

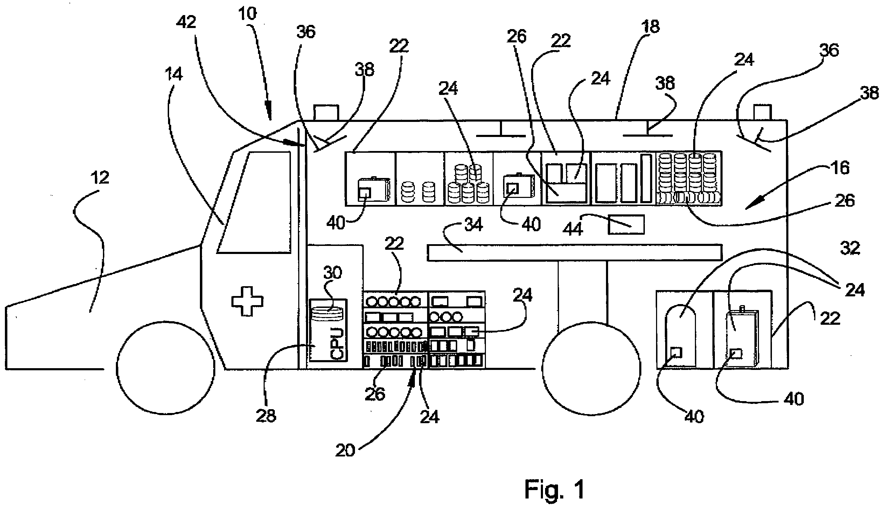

In Fig. 1 wird mit 10 eine Transportmaschine bezeichnet, welche als Ambulanzfahrzeug 12 ausgebildet ist. Das Ambulanzfahrzeug 12 verfügt über einen Fahrerraum 14 und einen Frachtraum 16, der vorliegend als Kofferaufbau 18 ausgebildet ist. Das Ausführungsbeispiel von Fig. 1 zeigt eine schematische Prinzipskizze des Ambulanzfahrzeugs 12 von einer Seitenansicht. Bei dem Kofferaufbau 18 ist dabei ein Seitenteil abgenommen dargestellt, um den Frachtraum 16 sichtbar machen zu können.

In dem Ambulanzfahrzeug 12 ist Ladung 20 des Frachtraums 16 in Schränken 22 verstaut. Die Ladung 20 besteht aus Frachtteilen 24, welche sich beispielsweise aus medizinischen Produkten 26, wie Verbandsmaterial, Sprays, Tabletten, Tropfen, medizinisches Gerät, Gasflaschen, Blutkonserven etc., zusammensetzt. Eine elektronische Datenverarbeitungsanlage 28 in dem Ambulanzfahrzeug 12 fasst diese Frachtteile 24 in einer Datenbank 30 zusammen. In der Datenbank 30 sind beispielsweise das Haltbarkeitsdatum und der Verbrauch der Frachtteile 24 gespeichert. Bei Bedarf kann auch der Lagerort, wo das medizinische Produkt 26 im Frachtraum 16 gelagert ist zur Verarbeitung gespeichert sein.

Der Kofferaufbau 18 ist als ambulante Transportkabine 32 mit Transportpatiententisch 34 ausgebaut. Auf dem Transportpatiententisch 34 lässt sich eine hier nicht dargestellte Patiententrage befestigen.

Innerhalb des Frachtraums 16 sind Antennen 36 an verschiedenen Orten angeordnet. Die Antennen 36 sind als Empfangsmodule 38 ausgebildet. Die Empfangsmodule 38 sind mit der elektronischen Datenverarbeitungsanlage 28 digital vernetzt. Die Frachtteile 24 sind mit Funk-Tags, sogenannten RFID-Transponder 40 (engl.: radio-frequencyidentification), markiert. Die elektronische Datenverarbeitungsanlage 28, die Empfangsmodule 38 und die RFID-Transponder bilden über ihre Vernetzung ein RFID-System 42. Die RFID-Transponder 40 werden auf die Frachtteile 24 oder deren Verpackung bzw. Behälter aufgebracht.

Bei den RFID-Transpondern 40 handelt es sich um "kleine und oft sehr flache", passive elektronische Halbleiterchips, welche erst durch die auslesenden Empfängermodule 38, aktiviert werden. Die Kopplung zwischen dem Empfangsmodul 38 und den RFID-Transpondern 40 geschieht durch vom Empfangsmodul 38 erzeugte magnetische Wechselfelder in geringer Reichweite oder durch hochfrequente Radiowellen. Damit werden nicht nur Daten übertragen, sondern auch der RFID-Transponder 40 mit Energie versorgt.

Durch die räumliche Anordnung der Antennen 36 lassen sich diese RFID-Transponder 40 in dem Frachtraum 16 und damit auch die entsprechenden Frachtteile 24 lokalisieren. Jedes eingehende oder abgehende Frachtteil 24 mit RFID-Transponder 40 wird in dem Frachtraum 16 erfasst und lokalisiert. Die Daten werden In der Datenbank 30 gespeichert. Mit der Kennung des RFID-Transponders 40 werden sowohl Ort, als auch Art des Frachtteils 24 selbst, sowie die Haltbarkeit und der Verbrauch in der Datenbank 30 zugeordnet. In dem RFID-Transponder 40 lassen sich grundsätzlich alle erforderlichen Daten speichern. Bei den medizinischen Produkten 26 ist neben Menge und Größe auch das Flaltbarkeitsdatum z.B. von großer Relevanz.

Wenn dann beispielsweise ein Verband aufgebraucht ist, registriert die elektronische Datenverarbeitung 28, dass der RFID-Transponder 40 sich nicht mehr im Frachtraum 16 befindet, sofern der RFID-Transponder 40 entsorgt bzw. gleichzeitig zerstört wurde oder sich nicht mehr an seinem vorgesehenen Platz befindet. Die elektronische Datenverarbeitungsanlage 28 kann nun die fehlenden Frachtteile 24 automatisch bei einer nicht dargestellten Zentrale anfordern. Die Kommunikation zur Anforderung der aufgebrauchten oder nicht mehr haltbaren Frachtteile 24 kann beispielsweise über Mobilfunk oder Wifi erfolgen. Die Zentrale verfügt dazu z.B. über einen eigenen Logistik-Server, welcher mit einem Lager- und Logistiksystem verbunden ist, um den Anforderungen des Ambulanzfahrzeugs 12 nachzukommen. Die fehlenden bzw. aufgebrauchten Frachtteile 24 werden dann aus Lagerbeständen wieder aufgefüllt oder ausgetauscht. Dieser Vorgang des Abgleichs und der Anlieferung neuer Frachtteile 24 kann dabei weitestgehend automatisch durchgeführt werden. Im Falle des Ambulanzfahrzeugs können die Verbrauchsdaten der medizinischen Produkte 26 über die Datenbank 30 einem Patienten zugeordnet werden, womit sich eine erleichterte Abrechnung mit einem Auftraggeber durchführen lässt.

Durch die Ortungsfunktion lassen sich die Frachttelle 24 mit der Datenbank 30 recht schnell innerhalb des Frachtraums 16 lokalisieren. Wenn also ein medizinisches Produkt 20 in der ambulanten Transportkabine 32 gesucht wird, reicht es aus, die Datenbank 30 der elektronischen Datenverarbeitungsanlage 28 abzufragen.

Stellt die elektronische Datenverarbeitungsanlage 28 fest, dass kritische Frachtteile 24 fehlen oder ihre Haltbarkeit abgelaufen ist, so kann ein Alarmsystem 44 mit einer Alarmfunktion in dem Fahrerraum 14 und/oder der ambulanten Transportkabine 32 ausgelöst werden. Dies kann beispielsweise über eine Alarmanzeige den Handelnden angezeigt werden. Gegebenenfalls kann in kritischen und für den Einsatz erheblichen Fällen die Alarmfunktion auch verhindern, dass das Ambulanzfahrzeug 12 abfährt, bis die fehlenden Frachteile 24 nachgeführt oder die abgelaufenen Frachtteile 24 ausgetauscht sind.

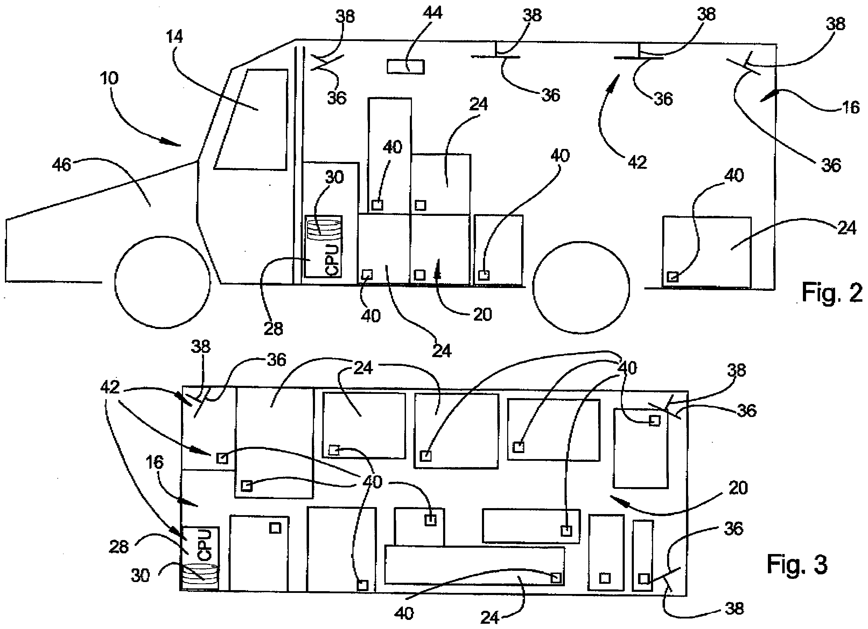

In Fig. 2 wird in einer schematischen Prinzipskizze die Transportmaschine 10 als ein Frachtfahrzeug 46 mit einem RFID-System 42 dargestellt. Zum automatischen Erfassen der Ladung 20 werden die RFID-Transponder 40 mittels der Empfangsmodule 38 ausgelesen und digital mit der Datenbank 30 in der elektronischen Datenverarbeitungsanlage 28 abgeglichen. Auch hier ist der Frachtraum 16 mit entfernter Seitenwand, wie in Fig. 1, dargestellt. Soweit sich Bestandteile der beiden Zeichnungen entsprechen werden auch dieselben Bezugszeichen, wie in Fig. 1, verwendet.

Durch die Frachtteile 24 sind alle mit dem RFID-Transponder 40 markiert. Der RFID-Transponder enthält Daten über die Art der Fracht, das Gewicht und das Volumen. Nachdem die Ladung 20 über das RFID-System 42 erfasst und in der Datenbank 30 gespeichert wurde, kann über ein Optimierungsalgorithmus die Lage der Frachtteile 24 In dem Frachtraum optimiert werden. Dabei kann beispielsweise insbesondere auch berücksichtigt werden, wann eine Ladung ausgeliefert wird und wie schwer oder sperrig eine Ladung ist, um schließlich eine optimale Verteilung im Frachtraum 16 zu erhalten. Damit kann der frachtraum 16 optimiert verwendet werden.

In Fig. 3 wird der Frachtraum von Fig. 2 in einer Draufsicht dargestellt. Soweit sich die beiden Figuren entsprechen werden auch hier dieselben Bezugszeichen verwendet Die Frachtteile 24 sind alle mit einem RFID-Transponder 40 markiert. Sie lassen sich damit nach Art, Umfang, Gewicht und Ort in der Datenbank 30 der elektronischen Datenverarbeitungsanlage 28 verarbeiten. Die elektronische Datenverarbeitungsanlage 28 optimiert nun den Ort, wo die Frachtteile 24 anzuordnen sind.

Bei einem Frachtfahrzeug, wie einem Kraftfahrzeug, spielt der Lagerort im Frachtraum 16 eine eher untergeordnete Rolle. Hier kommt es wesentlich auf die Reihenfolge an, mit der die Waren aus dem Frachtraum entnommen werden müssen. Bei einem Flugzeug, Helikopter oder Schiff kann dies schon eine ganz andere Bedeutung bekommen. Hier kommt es sehr wohl darauf an, wo die Ladung 20 verstaut wird. Dabei kann dieses RFID-System 42 helfen, den Lagerort in dem Frachtraum zu optimieren. Hierdurch kann unter Umständen mehr Ladung aufgenommen werden als es bisher möglich war. In einem Flugzeug kann die automatische Erfassung der Anordnung auch dazu genutzt werden, dass Flugzeug in geeigneter Weise zu trimmen. Hierzu kann die elektronische Datenverarbeitungsanlage 28 entsprechende Beladungsdaten zur Verarbeitung übermitteln. Die Beladungsdaten werden über das RFID-System 42 erfasst.

| | |
|---|---|
| 10 | Transportmaschine |
| 12 | Ambulanzfahrzeug |
| 14 | Fahrerraum |
| 16 | Frachtraum |
| 18 | Kofferaufbau |
| 20 | Ladung |
| 22 | Schränke |
| 24 | Frachtteile |
| 26 | Medizinische Produkte |
| 28 | Elektronische Datenverarbeitungsanlage |
| 30 | Datenbank |
| 32 | Ambulante Transportkabine |
| 34 | Transportpatiententisch |
| 36 | Antennen |
| 38 | Empfangsmodule |
| 40 | RFID-Transponder |
| 42 | RFID-System |
| 44 | Alarmsystem |
| 46 | Frachtfahrzeug |

## Patentansprüche

1. Transportmaschine (10) zum Transportieren einer Ladung (20), wobei die mitzuführende Ladung (20) mit einer Datenbank (30) einer elektronischen Datenverarbeitungsanlage (28) abzugleichen ist, **dadurch gekennzeichnet, dass** ein RFID-System (42) zum automatischen Erfassen von Ladung (20) und zum digitalen Abgleichen mit der Datenbank (30) vorgesehen ist.

2. Transportmaschine (10) zum Transportieren einer Ladung (20) nach Anspruch 1, **dadurch gekennzeichnet, dass** ein RFID-Transponder (40) an den zu erfassenden Frachtteilen (24) der Ladung (20) vorgesehen ist.

3. Transportmaschine (10) zum Transportieren einer Ladung (20) nach einem der Ansprüche 1 oder 2, **dadurch gekennzeichnet, dass** ein Empfänger (38) für die RFID-Transpander (40) in der Transportmaschine (10) zur Erfassung der Frachtteile (24) der Ladung (20) vorgesehen ist.

4. Transportmaschine (10) zum Transportieren einer Ladung (20) nach einem der Ansprüche 1 bis 3, **dadurch gekennzeichnet, dass** die Transportmaschine (10) als Kraftfahrzeug, Schiff, Hubschrauber oder Flugzeug ausgebildet ist.

5. Transportmaschine (10) zum Transportieren einer Ladung (20) nach einem der Ansprüche 1 bis 4, **dadurch gekennzeichnet, dass** die Transportmaschine (10) einen Frachtraum (16), Frachtcontainer oder Frachtbehälter aufweist, in dem die Frachtteile (24) der Ladung (20) mittels des RFID-Systems (42) lokalisiert sind.

6. Transportmaschine (10) zum Transportieren einer Ladung (20) nach einem der Ansprüche 1 bis 5, **dadurch gekennzeichnet, dass** zur Optimierung der Beladung hinsichtlich Anordnung, Gewicht und/oder Größe auf die Daten der Datenbank (30) der elektronischen Datenverarbeitungsanlage (28) zurückgegriffen wird.

7. Transportmaschine (10) zum Transportieren einer Ladung (20) nach einem der Ansprüche 5 oder 6, **dadurch gekennzeichnet, dass** ein Alarmsystem (44) aktiviert wird, sobald ein Beladungsfehler beim Abgleich mit der elektronischen Datenverarbeitungsanlage (28) erfasst wird.

8. Transportmaschine (10) zum Transportieren einer Ladung (20) nach einem der Ansprüche 1 bis 6, **dadurch gekennzeichnet, dass** das RFID-System (42) zum automatischen Erfassen von Ladung (20) zur Überwachung der Vollständigkeit der Ladung (20) vorgesehen ist.

9. Transportmaschine (10) zum Transportieren einer Ladung (20) nach Anspruch 8, **dadurch gekennzeichnet, dass** neue Frachtteile (24) nachgeführt werden, sofern der Abgleich mit der Datenbank (30) der elektronischen Datenverarbeitungsanlage (28) eine Unvollständigkeit der Ladung (20) erfasst.

10. Transportmaschine (10) zum Transportieren einer Ladung (20) nach einem der Ansprüche 1 bis 9, **dadurch gekennzeichnet, dass** das RFID-System (42) zum automatischen Erfassen von Ladung (20) zur Überwachung von Haltbarkeiten vorgesehen ist, wobei ein Ablaufdatum jeweils in dem RFID-Transponder (40) der zu überwachenden Frachtteile (24) vorgesehen ist.

11. Transportmaschine (10) zum Transportieren einer Ladung (20) nach Anspruch 10, **dadurch gekennzeichnet, dass** ein Alarmsystem (44) aktiviert wird, sobald die Haltbarkeiten von Frachtteilen (24) überschritten ist.

12. Transportmaschine (10) zum Transportieren einer Ladung (20) nach einem der Ansprüche 1 bis 11, **dadurch gekennzeichnet, dass** die Transportmaschine (10) als ein Bereitschaftsfahrzeug bzw. Einsatzfahrzeug für Feuerwehr oder Rettungsdienste (12) ausgebildet ist.

13. Transportmaschine (10) oder Transportbehälter (16) nach einem der Ansprüche 1 bis 11, **dadurch gekennzeichnet, dass** die elektronische Datenverarbeitungsanlage (28) in der Transportmaschine (10) angeordnet ist.
